# EUROPEAN PATENT APPLICATION

(11) **EP 4 744 817 A1**
(43) Date of publication of application: **20.05.2026**
(21) Application number: 24876013.4
(22) Date of filing: 16.05.2024
(51) Int. Cl.: B23K 37/04

(54) **WELDING PRESSING PLATE, WELDING SYSTEM AND WELDING METHOD**

(30) Priority: 12.10.2023 CN 202311321493
(71) Applicant: Contemporary Amperex Technology Co., Limited, Ningde, Fujian 352100 (CN)
(72) Inventor: WU, Kai, Ningde, Fujian 352100 (CN); PAN, Wensheng, Ningde, Fujian 352100 (CN); YANG, Mukai, Ningde, Fujian 352100 (CN); LI, Jie, Ningde, Fujian 352100 (CN); FAN, Xiang, Ningde, Fujian 352100 (CN); ZHANG, Yifei, Ningde, Fujian 352100 (CN)
(74) Representative: Ziebig Hengelhaupt Intellectual Property Attorneys Patentanwaltskanzlei PartGmbB
(86) International application number: PCT/CN2024/093717
(87) International publication number: WO 2025/077186

(57) **Abstract**

The present application discloses a welding pressing plate, a welding system, and a welding method. The welding pressing plate includes a pressing plate main body configured to press a welding member, the pressing plate main body being provided with a first welding track and a second welding track, where the first welding track and the second welding track are spaced apart, the first welding track and the second welding track each penetrate through two opposite side surfaces of the pressing plate main body, the pressing plate main body is disposed to cover an end surface of the welding member, the first welding track is configured to expose a portion of an edge of the welding member, and the second welding track is configured to expose a remaining portion of the edge of the welding member. Thus, the first welding track and the second welding track can collectively expose the edge of the welding member, which facilitates welding along the edge of the welding member while pressing the welding member, thereby improving the reliability of welding and the convenience in the welding process; and the pressing plate main body can further shield non-edge positions of the end surface of the welding member, which can mitigate the risk of weld spatter splashing onto the end surface of the welding member during welding.

## Description

The present application claims priority to Chinese Patent Application No. 2023113214934, titled "WELDING PRESSING PLATE, WELDING SYSTEM, AND WELDING METHOD", filed on October 12, 2023, the entire contents of which are incorporated herein by reference.

### TECHNICAL FIELD

The present application relates to the field of welding technologies, and in particular, to a welding pressing plate, a welding system, and a welding method.

### BACKGROUND

Welding is a process for joining two components together. Common welding methods include gas welding, fusion welding, laser welding, ultrasonic welding, and the like.

When two components need to be welded, it is necessary to press the components to bring the two components into abutment, after which welding is performed on the components to fix the two components together. However, how to achieve pressing while smoothly performing welding on the components has become a technical problem urgently needing to be solved.

### SUMMARY OF THE INVENTION

A primary objective of the present application is to provide a welding pressing plate, a welding system, and a welding method, aiming to solve the aforementioned technical problem existing in the prior art.

In order to solve the technical problem existing in the prior art, the present application provides a welding pressing plate. The welding pressing plate includes a pressing plate main body configured to press a welding member, the pressing plate main body being provided with a first welding track and a second welding track, where the first welding track and the second welding track are spaced apart, the first welding track and the second welding track each penetrate through two opposite side surfaces of the pressing plate main body, the pressing plate main body is disposed to cover an end surface of the welding member, the first welding track is configured to expose a portion of an edge of the welding member, and the second welding track is configured to expose a remaining portion of the edge of the welding member. Thus, the pressing plate main body is configured to press the welding member, and by means of the pressing plate main body, the welding member can be brought into close abutment with other components, which facilitates welding of the welding member and improves the stability of the welding; and the pressing plate main body is provided with a first welding track and a second welding track, where the first welding track and the second welding track can collectively expose the edge of the welding member, which facilitates welding along the edge of the welding member while pressing the welding member, thereby improving the reliability of welding and the convenience in the welding process; and the pressing plate main body can further shield non-edge positions of the end surface of the welding member, which can mitigate the risk of weld spatter splashing onto the end surface of the welding member during welding.

In some embodiments, the pressing plate main body includes a first pressing plate and a second pressing plate disposed in a split manner, the first pressing plate and the second pressing plate being each configured to press the welding member, where the first welding track is located on the first pressing plate, and the second welding track is located on the second pressing plate. Thus, the first pressing plate and the second pressing plate are disposed in a split manner, which can facilitate forming the first welding track on the first pressing plate and facilitate forming the second welding track on the second pressing plate, thereby reducing the difficulty in forming the first welding track and the second welding track and improving the production efficiency; and the first welding track and the second welding track are respectively positioned on the first pressing plate and the second pressing plate, which can further enable faster switching between edge positions of the welding member exposed through the first welding track and the second welding track, thereby enhancing the welding efficiency.

In some embodiments, the numbers of the first welding tracks and the second welding tracks are each at least two, the at least two first welding tracks being spaced apart from each other, and the at least two second welding tracks being spaced apart from each other, with one first welding track corresponding to one second welding track, where the welding pressing plate is disposed to cover end surfaces of at least two welding members, one first welding track is configured to expose a portion of an edge of one welding member, and one second welding track corresponding to the first welding track is configured to expose a remaining portion of the edge of the one welding member. Thus, by providing two first welding tracks and two second welding tracks at the same time, portions of edges of two welding members can be simultaneously exposed through the two first welding tracks, and the remaining portions of the edges of the two welding members can be simultaneously exposed through the two second welding tracks, thereby enabling simultaneous welding of edges of the two welding members and improving the welding efficiency.

In some embodiments, an opening area of the first welding track on a side of the pressing plate main body facing away from the welding member is greater than an opening area of the first welding track on a side of the pressing plate main body facing toward the welding member; and/or, an opening area of the second welding track on a side of the pressing plate main body facing away from the welding member is greater than an opening area of the second welding track on a side of the pressing plate main body facing toward the welding member. Thus, the welding track has a larger opening area on the side of the pressing plate main body facing away from the welding member, which can facilitate oblique incidence of welding laser onto the edge of the welding member relative to the end surface of the welding member, so as to complete the operation of welding the edge of the welding member, thereby mitigating the risk of affecting welding caused by reflection of the welding laser by the end surface of the welding member due to perpendicular incidence of the welding laser onto the edge of the welding member; and the welding track has a smaller opening area on the side of the pressing plate main body facing toward the welding member, which enables the pressing plate main body to shield a larger area of the end surface of the welding member, thereby further mitigating the risk of weld spatter splashing onto the end surface of the welding member during welding.

In some embodiments, from the side of the pressing plate main body facing away from the welding member to the side of the pressing plate main body facing toward the welding member, the opening area of the first welding track gradually decreases; and/or, from the side of the pressing plate main body facing away from the welding member to the side of the pressing plate main body facing toward the welding member, the opening area of the second welding track gradually decreases. Thus, the risk of the pressing plate main body interfering with the welding laser during oblique incidence of the welding laser onto the edge of the welding member can be further mitigated, thereby mitigating the risk of affecting welding caused by reflection of the welding laser by the end surface of the welding member due to perpendicular incidence of the welding laser onto the edge of the welding member.

In some embodiments, the first welding track includes a first track segment, and the second welding track includes a second track segment, the first track segment and the second track segment being both arc-shaped. Thus, the first track segment and the second track segment are both arc-shaped, such that when exposing the welding member through the first track segment and the second track segment, a ring-shaped edge of the welding member can be exposed, thereby facilitating welding of the ring-shaped edge of the welding member.

In some embodiments, the first welding track further includes two third track segments, where the two ends of the first track segment are respectively connected to one end of one of the third track segments and one end of the other one of the third track segments, and the other ends of the two third track segments extend away from the first track segment in the same direction; and/or, the second welding track includes two fourth track segments, where the two ends of the second track segment are respectively connected to one end of one of the fourth track segments and one end of the other one of the fourth track segments, and the other ends of the two fourth track segments extend away from the second track segment in the same direction. Thus, the first welding track includes a first track segment and two third track segments, the two third track segments extending away from the first track segment, and/or the second welding track includes a second track segment and two fourth track segments, such that when exposing the welding member through the first welding track and the second welding track, a ring-shaped or racetrack-shaped edge of the welding member can be exposed, which facilitates welding of the ring-shaped or racetrack-shaped edge of the welding member, thereby improving diversity of the shape of the exposed edge of the welding member to adapt to welding members of more shapes.

In some embodiments, the pressing plate main body is further provided with a first welding hole, the first welding hole penetrating through two opposite side surfaces of the pressing plate main body, where the first welding hole is disposed opposite to and spaced apart from the first track segment, the first welding hole being configured to expose a portion of the remaining portion of the edge; and/or, the first welding hole is disposed opposite to and spaced apart from the second track segment, the first welding hole being configured to expose a portion of the portion of the edge. Thus, with the first welding hole disposed at a position opposite to the first track segment, after exposing and welding a portion of the edge of the welding member through the first welding track, and before exposing and welding the remaining portion of the edge of the welding member through the second welding track, partial welding of the remaining portion of the edge of the welding member can be performed through the first welding hole to mitigate the risk of affecting subsequent welding caused by warping of the welding member after removal of the first welding track; and/or, with the first welding hole disposed at a position opposite to the second track segment, after exposing and welding a portion of the edge of the welding member through the second welding track, and before exposing and welding a portion of the edge of the welding member through the first welding track, partial welding of a portion of the edge of the welding member can be performed through the first welding hole to mitigate the risk of affecting subsequent welding caused by warping of the welding member after removal of the second welding track.

In some embodiments, the first welding track includes a fifth track segment and two sixth track segments, where the two sixth track segments are arc-shaped, inner arc sides of the two sixth track segments being oppositely disposed, and in the two sixth track segments, one pair of opposing ends are respectively connected to the two ends of the fifth track segment, and the other pair of opposing ends are spaced apart; and/or, the second welding track includes a seventh track segment and two eighth track segments, where the two eighth track segments are arc-shaped, inner arc sides of the two eighth track segments being oppositely disposed, and in the two eighth track segments, one pair of opposing ends are respectively connected to the two ends of the seventh track segment, and the other pair of opposing ends are spaced apart. Thus, the first welding track includes a fifth track segment and two sixth track segments, the two sixth track segments being arc-shaped, and/or the second welding track includes a seventh track segment and two eighth track segments, the two eighth track segments being arc-shaped, such that when exposing the welding member through the first welding track and the second welding track, a racetrack-shaped edge of the welding member can be exposed, which facilitates welding of the racetrack-shaped edge of the welding member, thereby improving diversity of the shape of the exposed edge of the welding member to adapt to welding members of more shapes.

In some embodiments, the pressing plate main body is further provided with a second welding hole, the second welding hole penetrating through two opposite side surfaces of the pressing plate main body, where the second welding hole is located between the two spaced-apart ends of the two sixth track segments, the second welding hole being configured to expose a portion of the remaining portion of the edge; and/or, the second welding hole is located between the two spaced-apart ends of the two eighth track segments, the second welding hole being configured to expose a portion of the portion of the edge. Thus, with the second welding hole disposed at a spacing between the two sixth track segments, after exposing and welding a portion of the edge of the welding member through the first welding track, and before exposing and welding the remaining portion of the edge of the welding member through the second welding track, partial welding of the remaining portion of the edge of the welding member can be performed through the second welding hole to mitigate the risk of affecting subsequent welding caused by warping of the welding member after removal of the first welding track; and/or, with the second welding hole disposed at a spacing between the two eighth track segments, after exposing and welding a portion of the edge of the welding member through the second welding track, and before exposing and welding a portion of the edge of the welding member through the first welding track, partial welding of a portion of the edge of the welding member can be performed through the second welding hole to mitigate the risk of affecting subsequent welding caused by warping of the welding member after removal of the second welding track.

In some embodiments, the first welding track includes a first sub-segment and a second sub-segment, where the first sub-segment and the second sub-segment are both arc-shaped, inner arc sides of the first sub-segment and the second sub-segment being oppositely disposed and spaced apart. Thus, the first welding track includes the arc-shaped first sub-segment and second sub-segment at the same time, which can facilitate cooperation with the second welding track to expose a ring-shaped or racetrack-shaped edge of the welding member, and facilitate welding of the ring-shaped or racetrack-shaped edge of the welding member, thereby improving diversity of the shape of the exposed edge of the welding member to adapt to welding members of more shapes.

In some embodiments, the first welding track further includes two third sub-segments and two fourth sub-segments, where the two ends of the first sub-segment are respectively connected to one end of one of the third sub-segments and one end of the other one of the third sub-segments, and the other ends of the two third sub-segments are disposed to extend toward the second sub-segment, the two ends of the second sub-segment are respectively connected to one end of one of the fourth sub-segments and one end of the other one of the fourth sub-segments, and the other ends of the two fourth sub-segments are disposed to extend toward the first sub-segment, and the other end of one of the third sub-segments is disposed opposite to and spaced apart from one of the fourth sub-segments. Thus, cooperation of the first welding track with the second welding track can be facilitated to expose a racetrack-shaped edge of the welding member, which facilitates welding of the racetrack-shaped edge of the welding member, thereby improving diversity of the shape of the exposed edge of the welding member to adapt to welding members of more shapes.

In some embodiments, the second welding track includes two fifth sub-segments, where the two fifth sub-segments are disposed to extend in the same direction, and the two fifth sub-segments are spaced apart in a direction perpendicular to an extension direction. Thus, the second welding track includes two fifth sub-segments extending in the same direction, which can reduce the complexity of the second welding track and improve the production efficiency; and the second welding track can cooperate with the first welding track to expose a racetrack-shaped edge of the welding member, which facilitates welding of the racetrack-shaped edge of the welding member, thereby improving diversity of the shape of the exposed edge of the welding member to adapt to welding members of more shapes.

To solve the technical problem existing in the prior art, the present application further provides a welding system, the welding system including a welding apparatus and the aforementioned welding pressing plate, where the welding pressing plate is configured to press a welding member, and the welding apparatus is configured to weld the welding member along an edge of the welding member.

To solve the technical problem existing in the prior art, the present application further provides a welding method, where the welding method is applied to the aforementioned welding system, the welding method including: pressing an end surface of the welding member by the pressing plate main body to cause the first welding track to expose a portion of an edge of the welding member; welding the portion of the edge of the welding member that is exposed through the first welding track by the welding apparatus to form a partial welding path; exposing a remaining portion of the edge of the welding member through the second welding track; and welding the remaining portion of the edge of the welding member that is exposed through the second welding track by the welding apparatus to form a closed end-to-end welding path. Thus, by pressing the end surface of the welding member by the pressing plate main body, the welding member can be brought into close abutment with other components through the pressing plate main body, which facilitates welding of the welding member and improves the stability of the welding; and after the welding apparatus welds the portion of the edge that is exposed through the first welding track, the remaining portion of the edge of the welding member is exposed through the second welding track, and then welding of the remaining portion of the edge that is exposed through the second welding track continues to be performed by the welding apparatus to form a closed end-to-end welding path, which can facilitate welding along the edge of the welding member while pressing the welding member, thereby improving the reliability of welding and the convenience in the welding process; and the pressing plate main body can further shield non-edge positions of the end surface of the welding member, which can mitigate the risk of weld spatter splashing onto the end surface of the welding member during welding.

In some embodiments, the step of exposing the remaining portion of the edge of the welding member through the second welding track includes: adjusting a position of the pressing plate main body pressing the end surface of the welding member to cause the second welding track to expose the remaining portion of the edge of the welding member. Thus, merely by adjusting the position of the pressing plate main body, the remaining portion of the edge of the welding member can be exposed through the second welding track, which can simplify the process of exposing the edge of the welding member during welding and improve the welding efficiency.

In some embodiments, the pressing plate main body includes a first pressing plate and a second pressing plate disposed in a split manner, where the first welding track is located on the first pressing plate, and the second welding track is located on the second pressing plate; the step of pressing the end surface of the welding member by the pressing plate main body includes: pressing the end surface of the welding member by the first pressing plate; and the step of exposing the remaining portion of the edge of the welding member through the second welding track includes: separating the first pressing plate and the welding member; and pressing the end surface of the welding member by the second pressing plate to expose the remaining portion of the edge of the welding member through the second welding track. Thus, the first pressing plate and the second pressing plate are disposed in a split manner, which can facilitate forming the first welding track on the first pressing plate and facilitate forming the second welding track on the second pressing plate, thereby reducing the difficulty in forming the first welding track and the second welding track and improving the production efficiency; and the first welding track and the second welding track are respectively positioned on the first pressing plate and the second pressing plate, and the welding member is pressed separately by the first pressing plate and the second pressing plate, which can enable faster switching between edge positions of the welding member exposed through the first welding track and the second welding track, thereby enhancing the welding efficiency.

In some embodiments, the step of pressing the end surface of the welding member by the first pressing plate includes: placing the welding member at a first welding station; and pressing, at the first welding station, the end surface of the welding member by the first pressing plate; and the step of pressing the end surface of the welding member by the second pressing plate includes: placing the welding member at a second welding station; and pressing, at the second welding station, the end surface of the welding member by the second pressing plate. Thus, the end surface of the welding member is pressed by the first pressing plate at the first welding station and the end surface of the welding member is pressed by the second pressing plate at the second welding station, which can mitigate the risk of interference between the first pressing plate and the second pressing plate when pressing the welding member; and corresponding welding operations are performed at specific stations, which can further improve the welding efficiency for welding the welding member.

### DESCRIPTION OF DRAWINGS

To illustrate the embodiments of the present application or technical solutions in the prior art more clearly, the drawings required for describing the embodiments will be briefly introduced below. Obviously, the drawings in the following description are merely some embodiments of the present application. For those of ordinary skill in the art, other drawings may be derived from these drawings without creative efforts.
FIG. 1 is a schematic structural diagram of a battery cell according to one or more embodiments;
FIG. 2 is a schematic structural diagram of a welding pressing plate pressing against a terminal post cover plate according to one or more embodiments;
FIG. 3 is a split schematic structural diagram of a welding pressing plate and a welding member according to one or more embodiments;
FIG. 4 is a first schematic structural diagram of a welding pressing plate according to one or more embodiments;
FIG. 5 is a second schematic structural diagram of a welding pressing plate according to one or more embodiments;
FIG. 6 is a third schematic structural diagram of a welding pressing plate according to one or more embodiments;
FIG. 7 is a fourth schematic structural diagram of a welding pressing plate according to one or more embodiments;
FIG. 8 is a fifth schematic structural diagram of a welding pressing plate according to one or more embodiments;
FIG. 9 is a sixth schematic structural diagram of a welding pressing plate according to one or more embodiments;
FIG. 10 is a seventh schematic structural diagram of a welding pressing plate according to one or more embodiments;
FIG. 11 is a schematic structural block diagram of a welding system according to one or more embodiments; and
FIG. 12 is a schematic flowchart of a welding method according to one or more embodiments.

Reference Numerals: battery cell 1; terminal post cover plate 2; terminal post main body 3; shell 4; welding member 5; welding pressing plate 10; welding system 20; welding apparatus 30; pressing plate main body 11; first pressing plate 12; second pressing plate 13; first welding track 100; second welding track 200; first track segment 310; second track segment 320; third track segment 330; fourth track segment 340; fifth track segment 350; sixth track segment 360; seventh track segment 370; eighth track segment 380; first welding hole 410; second welding hole 420; first sub-segment 510; second sub-segment 520; third sub-segment 530; fourth sub-segment 540; and fifth sub-segment 550.

### DETAILED DESCRIPTION

Embodiments of the technical solutions of the present application will be described in detail below with reference to the drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meaning of the above terms in embodiments the present application may be understood on a case-by-case basis.

At present, from the development of the market situation, the application of batteries is becoming increasingly more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of batteries, the market demand thereof is also constantly expanding.

A battery may be used in an electrical apparatus, enabling the electrical apparatus to achieve corresponding functions through electrical energy provided by the battery. For example, the electrical apparatus may include, but is not limited to, a mobile phone, a tablet, a laptop, an electric toy, an electric tool, a battery car, an electric vehicle, a ship, a spacecraft, and the like. Among them, the electric toy may include fixed or mobile electric toys, such as a game machine, an electric vehicle toy, an electric ship toy, and an electric airplane toy, and the like. The spacecraft may include an airplane, a rocket, a space shuttle and a spaceship, and the like.

The electrical apparatus may be a vehicle, the vehicle including a battery. The vehicle may be a fuel vehicle, a gas vehicle, or a new energy vehicle, and the new energy vehicle may be an all-electric vehicle, a hybrid vehicle, or an extended-range electric vehicle, or the like. A battery is provided inside the vehicle and may be arranged at the bottom or head or tail of the vehicle. The battery may be used to power the vehicle. For example, the battery may be used as an operating power source of the vehicle. The vehicle may further include a controller and a motor. The controller is used to control the battery to power the motor, for example, for meeting operating power demands when the vehicle is starting, navigating, and traveling. In some embodiments of the present application, the battery may not only be used as the operating power source of the vehicle, but also as a driving power source of the vehicle to replace or partially replace fuel or natural gas to provide driving power for the vehicle.

The shape of the battery may include, but is not limited to, a rectangular shape, a cylindrical shape, or any other shape.

In some implementations, the battery may include a box body and a plurality of battery cells, the battery cells being accommodated within the box body. The box body is configured to provide an accommodating space for the battery cells, and the plurality of battery cells may be connected in series, in parallel, or in a hybrid connection, where the hybrid connection means that there are both series and parallel connections among the plurality of battery cells. The plurality of battery cells may be directly connected in series, in parallel, or in hybrid connection, and then the entirety formed by the plurality of battery cells is accommodated in the box body. Certainly, the battery may also be formed by connecting the plurality of battery cells in series, in parallel, or in hybrid connection to form battery modules, and then connecting a plurality of battery modules in series, in parallel, or in hybrid connection to form an entirety, which is accommodated in the box body.

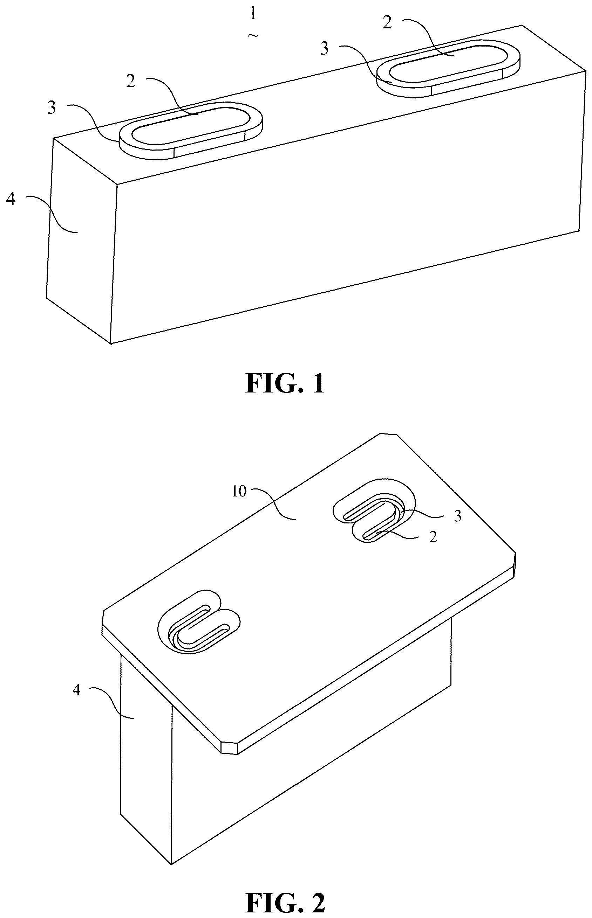

Referring to FIG. 1. FIG. 1 is a schematic structural diagram of a battery cell according to one or more embodiments.

The battery cell 1 refers to the smallest unit constituting the battery. The battery cell 1 may include a shell 4, an electrode assembly, and other functional components. The shell 4 may form an internal environment accommodating the electrode assembly, where the electrode assembly is located within the internal environment of the shell 4. The electrode assembly is a component where electrochemical reactions occur in the battery cell 1, and the shell may contain one or more electrode assemblies. The electrode assembly is primarily formed by winding or stacking a positive electrode plate and a negative electrode plate, and a separator is typically provided between the positive electrode plate and the negative electrode plate. The portions of the positive electrode plate and the negative electrode plate that have active materials constitute a main body portion of the electrode assembly, and the portions of the positive electrode plate and the negative electrode plate that do not have active materials each constitute a tab. The positive tab and the negative tab may be located at one end of the main body part together or located at two ends of the main body part respectively. During charging and discharging of the battery, the positive electrode active material and the negative electrode active material react with an electrolyte, and the tabs are connected to the electrode terminals to form a current loop.

To improve the product performance of the battery cell 1, the present application provides a new battery cell 1, the new battery cell 1 including an electrode terminal, which is hollow. Specifically, the electrode terminal may include a terminal post main body 3 and a terminal post cover plate 2, where the terminal post main body 3 is ring-shaped and protrudes from an end wall of the shell 4. A portion of the shell 4 encircled by the terminal post main body 3 may be recessed inward to form a hollow groove, where a bottom wall of the hollow groove has an opening for allowing a tab of the electrode assembly to pass through into the hollow groove, and a portion of the tab of the electrode assembly that is located within the hollow groove contacts and conducts with the terminal post main body 3. The terminal post cover plate 2 may be disposed to cover a groove opening of the hollow groove to seal the hollow groove. Specifically, a ring-shaped boss may be provided on a side wall of the hollow groove, the terminal post cover plate 2 is lap-jointed on the ring-shaped boss to cause the terminal post cover plate 2 to be disposed to cover the groove opening of the hollow groove. Further, a surface at a side of the terminal post cover plate 2 facing away from the bottom wall of the hollow groove may lie in the same plane as a surface at a side of the terminal post main body 3 facing away from the bottom wall of the hollow groove, facilitating welding between an outer edge of the terminal post cover plate 2 and an inner edge of the terminal post main body 3 to fixedly connect the terminal post cover plate 2 and the terminal post main body 3.

Referring to FIG. 2. FIG. 2 is a schematic structural diagram of a welding pressing plate pressing against a terminal post cover plate according to one or more embodiments.

When welding is required between the terminal post cover plate 2 and the terminal post main body 3, the welding pressing plate 10 may be pressed against the terminal post cover plate 2 to bring the terminal post cover plate 2 and the terminal post main body 3 into abutment; then, the terminal post cover plate 2 and the terminal post main body 3 are welded to fixedly connect the terminal post cover plate 2 and the terminal post main body 3.

As an example, when welding is required between the terminal post cover plate 2 and the terminal post main body 3, the terminal post cover plate 2 is first disposed to cover a groove opening of the hollow groove, then the welding pressing plate is 10 placed on an end surface of the terminal post cover plate 2, and a downward pressing force may be applied to the welding pressing plate 10 through other tooling equipment or manual operation to bring the terminal post cover plate 2 and the terminal post main body 3 into close abutment; after that, welding is performed along an upper edge of abutment between the terminal post cover plate 2 and the terminal post main body 3 to fixedly connect the terminal post cover plate 2 and the terminal post main body 3.

Specifically, the welding process may be non-continuous. For example, during welding, the position of the edge of the terminal post cover plate 2 that is exposed by the welding pressing plate may be altered to complete the welding operation of the terminal post cover plate 2 and the terminal post main body 3 through multiple intermittent welding operations. Here, there may be two electrode terminals on the battery cell 1. The terminal post cover plate 2 and the terminal post main body 3 of each of the two electrode terminals may be fixed through welding. During the actual operation process, the welding pressing plate 10 may first press against the terminal post cover plate 2 of one electrode terminal, and after completing welding of the terminal post cover plate 2 and the terminal post main body 3 of the one electrode terminal, the process proceeds to the welding operation for welding the terminal post cover plate 2 and the terminal post main body 3 of the other electrode terminal. Alternatively, the welding pressing plate 10 may simultaneously press against the terminal post cover plates 2 of both electrode terminals, then simultaneously perform welding operations on the terminal post cover plates 2 and the terminal post main bodies 3 of both electrode terminals.

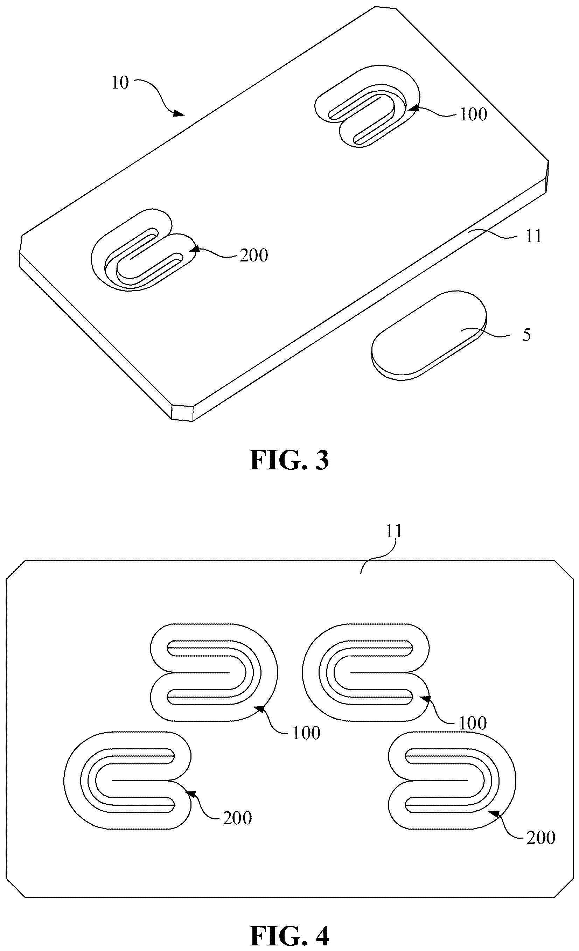

To enable pressing of the welding member while mitigating obstruction of positions requiring welding by the welding pressing plate 10, the present application provides a welding pressing plate. Referring to FIG. 3. FIG. 3 is a split schematic structural diagram of a welding pressing plate and a welding member according to one or more embodiments.

The welding pressing plate 10 includes a pressing plate main body 11 configured to press a welding member 5. The welding member 5 may be the aforementioned terminal post cover plate 2. Certainly, in other application scenarios, the welding member 5 may also be other components requiring welding. The pressing plate main body 11 may be plate-shaped, and the shape of the pressing plate main body 11 may be arbitrary; for example, an end surface of the pressing plate main body 11 may be circular, elliptical, racetrack-shaped, polygonal, and the like. The area of the end surface of the pressing plate main body 11 may be greater than the area of an end surface of the welding member 5; when the pressing plate main body 11 is pressed against the welding member 5, the pressing plate main body 11 may completely cover the end surface of the welding member 5. Specifically, the area of the end surface of the pressing plate main body 11 may be greater than a sum of the areas of end surfaces of a plurality of welding members 5, enabling the pressing plate main body 11 to simultaneously press against the plurality of welding members 5 and simultaneously cover end surfaces of the plurality of welding members 5.

The pressing plate main body 11 is provided with a first welding track 100 and a second welding track 200, where the first welding track 100 and the second welding track 200 are spaced apart, the first welding track 100 and the second welding track 200 each penetrate through two opposite side surfaces of the pressing plate main body 11, the pressing plate main body 11 is disposed to cover an end surface of the welding member 5, the first welding track 100 is configured to expose a portion of an edge of the welding member 5, and the second welding track 200 is configured to expose a remaining portion of the edge of the welding member 5. The first welding track 100 and the second welding track 200 may be of any shapes. As an example, the first welding track 100 and the second welding track 200 may both be U-shaped tracks, S-shaped tracks, linear tracks, wavy tracks, and the like, and the two ends of the first welding track 100 may be connected with the corresponding two ends of the second welding track 200 to form a closed end-to-end annular shape. The first welding track 100 and the second welding track 200 may each penetrate through the two opposite side surfaces of the pressing plate main body 11, such that the first welding track 100 and the second welding track 200 are both welding tracks in through-hole forms, and when the pressing plate main body 11 is pressed against the welding member 5, at least one of the first welding track 100 or the second welding track 200 may be configured to expose at least a portion of the end surface of the welding member 5. When welding along the edge of the welding member 5 is required, the pressing plate main body 11 may be pressed against the welding member 5, and the first welding track 100 is made to correspond to the position of a portion of the edge of the welding member 5 to expose the portion of the edge of the welding member 5 through the first welding track 100, facilitating a welding operation on the portion of the edge that is exposed through the first welding track 100; and after performing the welding operation on the portion of the edge of the welding member 5, the position where the pressing plate main body 11 presses on the welding member 5 may be changed, and the second welding track 200 is made to correspond to the position of a remaining portion of the edge of the welding member 5 to expose the remaining portion of the edge of the welding member 5 through the second welding track 200, facilitating a welding operation on the remaining portion of the edge that is exposed through the second welding track 200, thereby completing the operation of welding along the edge of the welding member 5.

Through the aforementioned implementation, the pressing plate main body 11 is configured to press the welding member 5, and by means of the pressing plate main body 11, the welding member 5 can be brought into close abutment with other components, which facilitates welding of the welding member 5 and improves the stability of the welding; and the pressing plate main body 11 is provided with a first welding track 100 and a second welding track 200, where the first welding track 100 and the second welding track 200 can collectively expose the edge of the welding member 5, which facilitates welding along the edge of the welding member 5 while pressing the welding member 5, thereby improving the reliability of welding and the convenience in the welding process; and the pressing plate main body 11 can further shield non-edge positions of the end surface of the welding member 5, which can mitigate the risk of weld spatter splashing onto the end surface of the welding member 5 during welding.

In some embodiments, an opening area of the first welding track 100 on a side of the pressing plate main body 11 facing away from the welding member 5 is greater than an opening area of the first welding track 100 on a side of the pressing plate main body 11 facing toward the welding member 5. When laser welding is employed for welding along the edge of the welding member 5, the opening area of the first welding track 100 on the side of the pressing plate main body 11 facing away from the welding member 5 is larger, which allows welding laser to obliquely incident onto the edge of the welding member 5 relative to the end surface of the welding member 5, thereby performing laser welding along the edge of the welding member 5; and since the welding laser is obliquely incident, based on the principle of light reflection, when the laser is incident onto the welding member 5, reflected laser exits at an angle to the incident laser, which can mitigate the risk of affecting welding caused by reflection of the welding laser by the end surface of the welding member 5 along the incidence direction of the welding laser due to perpendicular incidence of the welding laser onto the edge of the welding member 5. The opening area of the first welding track 100 on the side of the pressing plate main body 11 facing toward the welding member 5 is smaller, such that when pressing the welding member 5 with the pressing plate main body 11, by disposing the pressing plate main body 11 to cover other positions of the edge of the welding member 5 that is exposed through the first welding track 100 on the end surface of the welding member 5, the pressing plate main body 11 can shield a larger area of the end surface of the welding member 5, thereby further mitigating the risk of weld spatter splashing onto the end surface of the welding member 5 during welding.

Additionally/alternatively, an opening area of the second welding track 200 on a side of the pressing plate main body 11 facing away from the welding member 5 is greater than an opening area of the second welding track 200 on a side of the pressing plate main body 11 facing toward the welding member 5. When laser welding is employed for welding along the edge of the welding member 5, the opening area of the second welding track 200 on the side of the pressing plate main body 11 facing away from the welding member 5 is larger, which allows welding laser to obliquely incident onto the edge of the welding member 5 relative to the end surface of the welding member 5, thereby performing laser welding along the edge of the welding member 5; and since the welding laser is obliquely incident, based on the principle of light reflection, when the laser is incident onto the welding member 5, reflected laser exits at an angle to the incident laser, which can mitigate the risk of affecting welding caused by reflection of the welding laser by the end surface of the welding member 5 along the incidence direction of the welding laser due to perpendicular incidence of the welding laser onto the edge of the welding member 5. The opening area of the second welding track 200 on the side of the pressing plate main body 11 facing toward the welding member 5 is smaller, such that when pressing the welding member 5 with the pressing plate main body 11, by disposing the pressing plate main body 11 to cover other positions of the edge of the welding member 5 that is exposed through the second welding track 200 on the end surface of the welding member 5, the pressing plate main body 11 can shield a larger area of the end surface of the welding member 5, thereby further mitigating the risk of weld spatter splashing onto the end surface of the welding member 5 during welding.

Further, from the side of the pressing plate main body 11 facing away from the welding member 5 to the side of the pressing plate main body 11 facing toward the welding member 5, the opening area of the first welding track 100 gradually decreases. An inner circumferential wall surface and/or an outer circumferential wall surface of the first welding track 100 may be in inclined arrangement to cause the opening area of the first welding track 100 to gradually decrease. For example, taking the pressing plate main body 11 shown in FIG. 3 as an example, both the inner circumferential wall surface and the outer circumferential wall surface of the first welding track 100 are in inclined arrangement. The wall surface of the entire first welding track 100 may be in inclined arrangement, or the wall surface of a portion of the first welding track 100 may be in inclined arrangement. For example, taking the pressing plate main body 11 shown in FIG. 3 as an example, the first welding track 100 may also be in a stepped configuration, with a portion of the first welding track 100 facing away from the welding member 5 having a gradually decreasing opening area, and a portion facing toward the welding member 5 having an unchanged opening area.

Additionally/alternatively, from the side of the pressing plate main body 11 facing away from the welding member 5 to the side of the pressing plate main body 11 facing toward the welding member 5, the opening area of the second welding track 200 gradually decreases. An inner circumferential wall surface and/or an outer circumferential wall surface of the second welding track 200 may be in inclined arrangement to cause the opening area of the second welding track 200 to gradually decrease. For example, taking the pressing plate main body 11 shown in FIG. 3 as an example, both the inner circumferential wall surface and the outer circumferential wall surface of the second welding track 200 are in inclined arrangement. The wall surface of the entire second welding track 200 may be in inclined arrangement, or the wall surface of a portion of the second welding track 200 may be in inclined arrangement. For example, taking the pressing plate main body 11 shown in FIG. 3 as an example, the second welding track 200 may also be in a stepped configuration, with a portion of the second welding track 200 facing away from the welding member 5 having a gradually decreasing opening area, and a portion facing toward the welding member 5 having an unchanged opening area.

Thus, the risk of the pressing plate main body 11 interfering with the welding laser during oblique incidence of the welding laser onto the edge of the welding member 5 can be further mitigated, thereby mitigating the risk of affecting welding caused by reflection of the welding laser by the end surface of the welding member 5 due to perpendicular incidence of the welding laser onto the edge of the welding member 5.

Referring to FIG. 4. FIG. 4 is a first schematic structural diagram of a welding pressing plate 10 according to one or more embodiments.

The numbers of the first welding tracks 100 and the second welding tracks 200 are each at least two, the at least two first welding tracks 100 being spaced apart from each other, and the at least two second welding tracks 200 being spaced apart from each other, with one first welding track 100 corresponding to one second welding track 200, where the welding pressing plate 10 is disposed to cover end surfaces of at least two welding members 5, one first welding track 100 is configured to expose a portion of an edge of one welding member 5, and one second welding track 200 corresponding to the first welding track 100 is configured to expose a remaining portion of the edge of the one welding member 5. Taking FIG. 4 as an example, two first welding tracks 100 and two second welding tracks 200 are included, where the left first welding track 100 and the left second welding track 200 may correspond to each other, and the right first welding track 100 and the right second welding track 200 may correspond to each other. When the welding pressing plate 10 is disposed to cover end surfaces of at least two welding members 5, the two first welding tracks 100 may respectively correspond to portions of the edges of the two welding members 5 to simultaneously expose the portions of the edges of the two welding members 5 through the two first welding tracks 100, facilitating welding operations on the portions of the edges that are exposed through the first welding tracks 100; and after performing the welding operations on the portions of the edges of the two welding members 5, positions where the pressing plate main body 11 presses on the welding members 5 may be changed, and the two second welding tracks 200 may be made to respectively correspond to positions of remaining portions of the edges of the two welding members 5 to expose the remaining portions of the edges of the two welding members 5 through the second welding tracks 200, facilitating welding operations on the remaining portions of the edges that are exposed through the two second welding tracks 200, thereby completing the operations of welding along the edges of the two welding members 5. Thus, by simultaneously providing two first welding tracks 100 and two second welding tracks 200, portions of edges of two welding members 5 can be simultaneously exposed through the two first welding tracks 100, and the remaining portions of the edges of the two welding members 5 can be simultaneously exposed through the two second welding tracks 200, thereby enabling simultaneous welding of edges of the two welding members 5 and improving the welding efficiency.

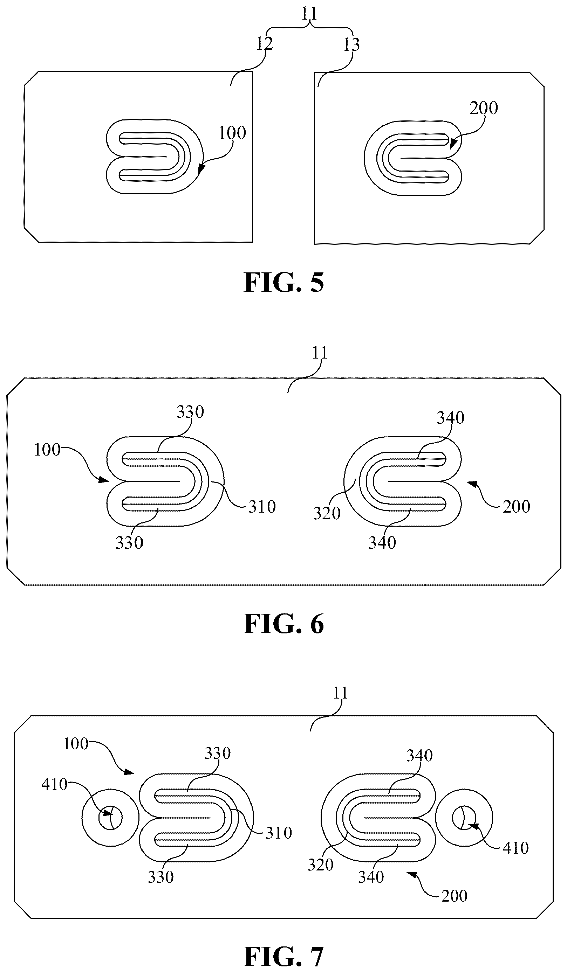

Referring to FIG. 5. FIG. 5 is a second schematic structural diagram of a welding pressing plate 10 according to one or more embodiments.

The pressing plate main body 11 includes a first pressing plate 12 and a second pressing plate 13 disposed in a split manner, the first pressing plate 12 and the second pressing plate 13 being each configured to press the welding member 5, where the first welding track 100 is located on the first pressing plate 12, and the second welding track 200 is located on the second pressing plate 13. The first pressing plate 12 and the second pressing plate 13 are two independent pressing plates. When welding along the edge of the welding member 5 is required, the first pressing plate 12 may be pressed against the welding member 5, and the first welding track 100 is made to correspond to the position of a portion of the edge of the welding member 5 to expose the portion of the edge of the welding member 5 through the first welding track 100, facilitating a welding operation on the portion of the edge that is exposed through the first welding track 100; and after performing the welding operation on the portion of the edge of the welding member 5, the first pressing plate 12 may be separated from the welding member 5, then the welding member 5 is pressed by the second pressing plate 13, and the second welding track 200 is made to correspond to the position of a remaining portion of the edge of the welding member 5 to expose the remaining portion of the edge of the welding member 5 through the second welding track 200, facilitating a welding operation on the remaining portion of the edge that is exposed through the second welding track 200, thereby completing the operation of welding along the edge of the welding member 5. Thus, the first pressing plate 12 and the second pressing plate 13 are disposed in a split manner, which can facilitate forming the first welding track 100 on the first pressing plate 12 and facilitate forming the second welding track 200 on the second pressing plate 13, thereby reducing the difficulty in forming the first welding track 100 and the second welding track 200 and improving the production efficiency; and the first welding track 100 and the second welding track 200 are respectively positioned on the first pressing plate 12 and the second pressing plate 13, which can further enable faster switching between edge positions of the welding member 5 exposed through the first welding track 100 and the second welding track 200, thereby enhancing the welding efficiency.

Referring to FIG. 6. FIG. 6 is a third schematic structural diagram of a welding pressing plate 10 according to one or more embodiments.

The first welding track 100 includes a first track segment 310, and the second welding track 200 includes a second track segment 320, the first track segment 310 and the second track segment 320 being both arc-shaped. The first track segment 310 and the second track segment 320 are both arc-shaped, such that when exposing the welding member 5 through the first track segment 310 and the second track segment 320, a ring-shaped edge of the welding member 5 can be exposed, thereby facilitating welding of the ring-shaped edge of the welding member 5. As an example, when the first track segment 310 and the second track segment 320 are both semi-circular arc-shaped, a circular ring-shaped edge of the welding member 5 may be exposed through the first track segment 310 and the second track segment 320. When the first track segment 310 and the second track segment 320 are both semi-elliptical arc-shaped, an elliptical edge of the welding member 5 may be exposed through the first track segment 310 and the second track segment 320.

Further, the first welding track 100 further includes two third track segments 330, where the two ends of the first track segment 310 are respectively connected to one end of one of the third track segments 330 and one end of the other one of the third track segments 330, and the other ends of the two third track segments 330 extend away from the first track segment 310 in the same direction. The two third track segments 330 may be linear, the two third track segments 330 may be disposed parallel to each other, and the two ends of the first track segment 310 are respectively connected to one end of one of the two third track segments 330 and one end of the other one of the two third track segments, such that the first welding track 100 can be in a U-shaped configuration. When the second welding track 200 includes the arc-shaped second track segment 320, the first welding track 100 and the second welding track 200 may expose an arc-shaped welding edge or expose a racetrack-shaped welding edge.

Additionally/alternatively, the second welding track 200 includes two fourth track segments 340, where the two ends of the second track segment 320 are respectively connected to one end of one of the fourth track segments 340 and one end of the other one of the fourth track segments 340, and the other ends of the two fourth track segments 340 extend away from the second track segment 320 in the same direction. The two fourth track segments 340 may be linear, the two fourth track segments 340 may be disposed parallel to each other, and the two ends of the second track segment 320 are respectively connected to one end of one of the two fourth track segments 340 and one end of the other one of the two fourth track segments, enabling the second welding track 200 to be U-shaped. When the first welding track 100 includes the arc-shaped second track segment 320, or the first welding track 100 includes the first track segment 310 and two third track segments 330, the first welding track 100 and the second welding track 200 may expose an arc-shaped welding edge or expose a racetrack-shaped welding edge.

Thus, the first welding track 100 includes a first track segment 310 and two third track segments 330, the two third track segments 330 extending away from the first track segment 310, and/or the second welding track 200 includes a second track segment 320 and two fourth track segments 340, such that when exposing the welding member 5 through the first welding track 100 and the second welding track 200, a ring-shaped or racetrack-shaped edge of the welding member 5 can be exposed, which facilitates welding of the ring-shaped or racetrack-shaped edge of the welding member 5, thereby improving diversity of the shape of the exposed edge of the welding member 5 to adapt to welding members 5 of more shapes.

Referring to FIG. 7. FIG. 7 is a fourth schematic structural diagram of a welding pressing plate 10 according to one or more embodiments.

The pressing plate main body 11 is further provided with a first welding hole 410, the first welding hole 410 penetrating through two opposite side surfaces of the pressing plate main body 11. The first welding hole 410 is a through hole. The shape of the first welding hole 410 may be set according to actual conditions. By way of example, the first welding hole 410 may be a circular hole, an arc-shaped hole, a linear hole, and the like.

The first welding hole 410 is disposed opposite to and spaced apart from the first track segment 310, the first welding hole 410 being configured to expose a portion of the remaining portion of the edge. When welding along the edge of the welding member 5 is required, the pressing plate main body 11 may be pressed against the welding member 5, and the first welding track 100 is made to correspond to the position of a portion of the edge of the welding member 5 to expose the portion of the edge of the welding member 5 through the first welding track 100 and to expose a portion of the remaining portion of the edge through the first welding hole 410, facilitating welding operations on the portions of the edge that are exposed through the first welding track 100 and the first welding hole 410; and after completing the welding operations on the portions of the edge of the welding member 5, the state in which the pressing plate main body 11 presses the welding member 5 is withdrawn, and since the welding of the portions of the edge of the welding member 5 and the welding of the portion of the remaining portion of the edge at positions opposite to the portions of the edge have been completed, the welding member 5 is substantially in a fixed state, mitigating the risk of affecting subsequent welding caused by warping of the welding member 5 after withdrawal of the pressing plate main body 11.

Additionally/alternatively, the first welding hole 410 is disposed opposite to and spaced apart from the second track segment 320, the first welding hole 410 being configured to expose a portion of the edge. In this embodiment, in a case where the first welding hole 410 is disposed opposite to and spaced apart from the second track segment 320, when welding along the edge of the welding member 5 is required, the edge of the welding member 5 may be first exposed through the second welding track 200, and the edge of the welding member 5 may then be exposed through the first welding track 100. In a case where the first welding hole 410 is disposed opposite to and spaced apart from the first track segment 310, when welding along the edge of the welding member 5 is required, the edge of the welding member 5 may be first exposed through the first welding track 200, and the edge of the welding member 5 may then be exposed through the second welding track 100. When there are two first welding holes 410, one first welding hole 410 is disposed opposite to and spaced apart from the first track segment 310, and the other first welding hole 410 is disposed opposite to and spaced apart from the second track segment 320, a portion of the edge of the welding member 5 may first be exposed through one of the first welding track 100 and the second welding track 200, and the remaining portion of the edge of the welding member 5 may then be exposed through the other one.

Thus, with the first welding hole 410 disposed at a position opposite to the first track segment 310, after exposing and welding a portion of the edge of the welding member 5 through the first welding track 100, and before exposing and welding the remaining portion of the edge of the welding member 5 through the second welding track 200, partial welding of the remaining portion of the edge of the welding member 5 can be performed through the first welding hole 410 to mitigate the risk of affecting subsequent welding caused by warping of the welding member 5 after removal of the first welding track 100; and/or, with the first welding hole 410 disposed at a position opposite to the second track segment 320, after exposing and welding a portion of the edge of the welding member 5 through the second welding track 200, and before exposing and welding a portion of the edge of the welding member 5 through the first welding track 100, partial welding of a portion of the edge of the welding member 5 can be performed through the first welding hole 410 to mitigate the risk of affecting subsequent welding caused by warping of the welding member 5 after removal of the second welding track 200.

An opening area of the first welding hole 410 on a side of the pressing plate main body 11 facing away from the welding member 5 may be greater than an opening area of the first welding hole 410 on a side of the pressing plate main body 11 facing toward the welding member 5. Further, from the side of the pressing plate main body 11 facing away from the welding member 5 to the side of the pressing plate main body 11 facing toward the welding member 5, the opening area of the first welding track 100 may gradually decrease. When laser welding is employed for welding along the edge of the welding member 5, the opening area of the first welding hole 410 on the side of the pressing plate main body 11 facing away from the welding member 5 is larger, which allows welding laser to obliquely incident onto the edge of the welding member 5 relative to the end surface of the welding member 5, thereby performing laser welding along the edge of the welding member 5; and since the welding laser is obliquely incident, based on the principle of light reflection, when the laser is incident onto the welding member 5, reflected laser exits at an angle to the incident laser, which can mitigate the risk of affecting welding caused by reflection of the welding laser by the end surface of the welding member 5 along the incidence direction of the welding laser due to perpendicular incidence of the welding laser onto the edge of the welding member 5.

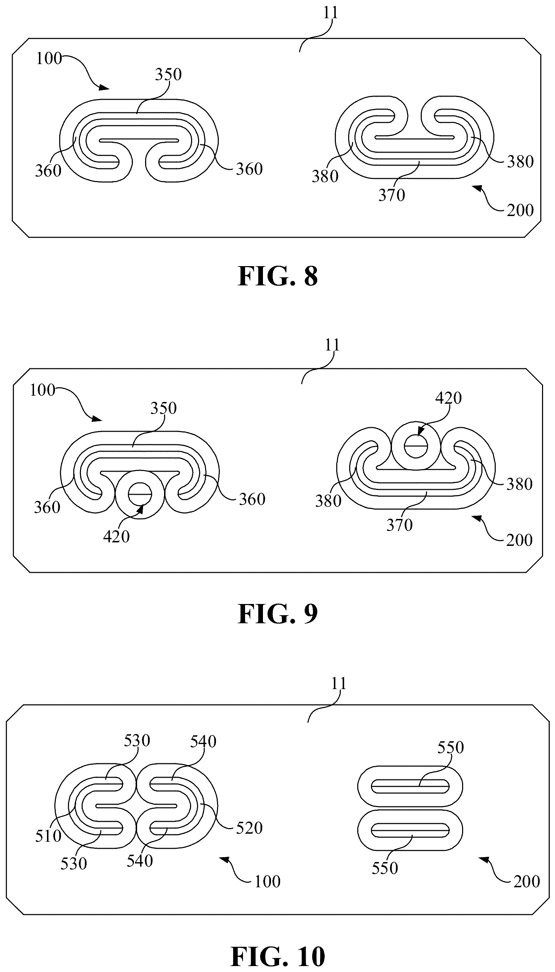

Referring to FIG. 8. FIG. 8 is a fifth schematic structural diagram of a welding pressing plate 10 according to one or more embodiments.

The first welding track 100 includes a fifth track segment 350 and two sixth track segments 360, where the two sixth track segments 360 are arc-shaped, inner arc sides of the two sixth track segments 360 being oppositely disposed, and in the two sixth track segments 360, one pair of opposing ends are respectively connected to the two ends of the fifth track segment 350, and the other pair of opposing ends are spaced apart. The two sixth track segments 360 may be semi-circular arc-shaped, elliptical arc-shaped, or the like, and the fifth track segment 350 may be a linear track segment. The two sixth track segments 360 are respectively connected to the two ends of the fifth track segment 350, such that the first welding track 100 can present a partial racetrack-shaped structure similar to that lacking one straight side. In this case, if it is required to expose a racetrack-shaped edge of the welding member 5 through the first welding track 100 and the second welding track 200, the second welding track 200 only needs to include one track segment structure that is a straight side.

Additionally/alternatively, the second welding track 200 includes a seventh track segment 370 and two eighth track segments 380, where the two eighth track segments 380 are arc-shaped, inner arc sides of the two eighth track segments 380 being oppositely disposed, and in the two eighth track segments 380, one pair of opposing ends are respectively connected to the two ends of the seventh track segment 370, and the other pair of opposing ends are spaced apart. The two eighth track segments 380 may be semi-circular arc-shaped, elliptical arc-shaped, or the like, and the sixth track segment 360 may be a linear track segment. The two eighth track segments 380 are respectively connected to the two ends of the sixth track segment 360, such that the second welding track 200 can present a partial racetrack-shaped structure similar to that lacking one straight side. If it is required to expose a racetrack-shaped edge of the welding member 5 through the first welding track 100 and the second welding track 200, the first welding track 100 only needs to include one track segment structure that is a straight side. In the present embodiment, the first welding track 100 may include a fifth track segment 350 and two eighth track segments 380, while the second welding track 200 includes a seventh track segment 370 and two eighth track segments 380, such that either the first welding track 100 or the second welding track 200 can be selected at will to sequentially expose the edge of the welding member 5.

Thus, the first welding track 100 includes a fifth track segment 350 and two sixth track segments 360, the two sixth track segments 360 being arc-shaped, and/or the second welding track 200 includes a seventh track segment 370 and two eighth track segments 380, the two eighth track segments 380 being arc-shaped, such that when exposing the welding member 5 through the first welding track 100 and the second welding track 200, a racetrack-shaped edge of the welding member 5 can be exposed, which facilitates welding of the racetrack-shaped edge of the welding member 5, thereby improving diversity of the shape of the exposed edge of the welding member 5 to adapt to welding members 5 of more shapes.

Referring to FIG. 9. FIG. 9 is a sixth schematic structural diagram of a welding pressing plate 10 according to one or more embodiments.

The pressing plate main body 11 is further provided with a second welding hole 420, the second welding hole 420 penetrating through two opposite side surfaces of the pressing plate main body 11. The second welding hole 420 is a through hole. The shape of the second welding hole 420 may be set according to actual conditions. By way of example, the second welding hole 420 may be a circular hole, an arc-shaped hole, a linear hole, and the like.

The second welding hole 420 is located between the two spaced-apart ends of the two sixth track segments 360, the second welding hole 420 being configured to expose a portion of the remaining portion of the edge. When welding along the edge of the welding member 5 is required, the pressing plate main body 11 may be pressed against the welding member 5, and the first welding track 100 is made to correspond to the position of a portion of the edge of the welding member 5 to expose the portion of the edge of the welding member 5 through the first welding track 100 and to expose a portion of the remaining portion of the edge through the second welding hole 420, facilitating welding operations on the portions of the edge that are exposed through the first welding track 100 and the second welding hole 420; and after completing the welding operations on the portions of the edge of the welding member 5, the state in which the pressing plate main body 11 presses the welding member 5 is withdrawn, and since the welding of the portions of the edge of the welding member 5 and the welding of the portion of the remaining portion of the edge at positions opposite to the portions of the edge have been completed, the welding member 5 is substantially in a fixed state, mitigating the risk of affecting subsequent welding caused by warping of the welding member 5 after withdrawal of the pressing plate main body 11.

Additionally/alternatively, the second welding hole 420 is located between the two spaced-apart ends of the two eighth track segments 380, the second welding hole 420 being configured to expose a portion of the portion of the edge. In this embodiment, in a case where the second welding hole 420 is disposed opposite to and spaced apart from the second track segment 320, when welding along the edge of the welding member 5 is required, the edge of the welding member 5 may be first exposed through the second welding track 200, and the edge of the welding member 5 may then be exposed through the first welding track 100. In a case where the second welding hole 420 is disposed opposite to and spaced apart from the first track segment 310, when welding along the edge of the welding member 5 is required, the edge of the welding member 5 may be first exposed through the first welding track 200, and the edge of the welding member 5 may then be exposed through the second welding track 100. When there are two second welding holes 420, one second welding hole 420 is disposed opposite to and spaced apart from the first track segment 310, and the other second welding hole 420 is disposed opposite to and spaced apart from the second track segment 320, a portion of the edge of the welding member 5 may first be exposed through one of the first welding track 100 and the second welding track 200, and the remaining portion of the edge of the welding member 5 may then be exposed through the other one.

Thus, with the second welding hole 420 disposed at a spacing between the two sixth track segments 360, after exposing and welding a portion of the edge of the welding member 5 through the first welding track 100, and before exposing and welding the remaining portion of the edge of the welding member 5 through the second welding track 200, partial welding of the remaining portion of the edge of the welding member 5 can be performed through the second welding hole 420 to mitigate the risk of affecting subsequent welding caused by warping of the welding member 5 after removal of the first welding track 100; and/or, with the second welding hole 420 disposed at a spacing between the two eighth track segments, after exposing and welding a portion of the edge of the welding member 5 through the second welding track 200, and before exposing and welding a portion of the edge of the welding member 5 through the first welding track 100, partial welding of a portion of the edge of the welding member 5 can be performed through the second welding hole 420 to mitigate the risk of affecting subsequent welding caused by warping of the welding member 5 after removal of the second welding track 200.

An opening area of the second welding hole 420 on a side of the pressing plate main body 11 facing away from the welding member 5 may be greater than an opening area of the second welding hole 420 on a side of the pressing plate main body 11 facing toward the welding member 5. Further, from the side of the pressing plate main body 11 facing away from the welding member 5 to the side of the pressing plate main body 11 facing toward the welding member 5, the opening area of the first welding track 100 may gradually decrease. When laser welding is employed for welding along the edge of the welding member 5, the opening area of the second welding hole 420 on the side of the pressing plate main body 11 facing away from the welding member 5 is larger, which allows welding laser to obliquely incident onto the edge of the welding member 5 relative to the end surface of the welding member 5, thereby performing laser welding along the edge of the welding member 5; and since the welding laser is obliquely incident, based on the principle of light reflection, when the laser is incident onto the welding member 5, reflected laser exits at an angle to the incident laser, which can mitigate the risk of affecting welding caused by reflection of the welding laser by the end surface of the welding member 5 along the incidence direction of the welding laser due to perpendicular incidence of the welding laser onto the edge of the welding member 5.

Referring to FIG. 10. FIG. 10 is a seventh schematic structural diagram of a welding pressing plate 10 according to one or more embodiments.

The first welding track 100 includes a first sub-segment 510 and a second sub-segment 520, where the first sub-segment 510 and the second sub-segment 520 are both arc-shaped, inner arc sides of the first sub-segment 510 and the second sub-segment 520 being oppositely disposed and spaced apart. The first sub-segment 510 and the second sub-segment 520 are both arc-shaped, and the inner arc sides of the first sub-segment 510 and the second sub-segment 520 are oppositely disposed and spaced apart. When exposing the welding member 5 through the first welding track 100 and the first welding track 100, a ring-shaped or racetrack-shaped edge of the welding member 5 can be exposed. As an example, the first sub-segment 510 and the second sub-segment 520 may both be quarter-circular arc-shaped. The second welding track 200 may also include two quarter-circular arc-shapes that are oppositely disposed and spaced apart, such that a circular ring-shaped edge of the welding member 5 can be exposed through the first welding track 100 and the first welding track 100. As an example, the first sub-segment 510 and the second sub-segment 520 may both be circular arc-shaped. The second welding track 200 may include two linear sub-segments that are oppositely disposed and spaced apart, such that a racetrack-shaped edge of the welding member 5 can be exposed through the first welding track 100 and the first welding track 100. Thus, the first welding track 100 includes the arc-shaped first sub-segment 510 and second sub-segment 520 at the same time, which can facilitate cooperation with the second welding track 200 to expose a ring-shaped or racetrack-shaped edge of the welding member 5, and facilitate welding of the ring-shaped or racetrack-shaped edge of the welding member 5, thereby improving diversity of the shape of the exposed edge of the welding member 5 to adapt to welding members 5 of more shapes.

Further, the first welding track 100 further includes two third sub-segments 530 and two fourth sub-segments 540, where the two ends of the first sub-segment 510 are respectively connected to one end of one of the third sub-segments 530 and one end of the other one of the third sub-segments 530, and the other ends of the two third sub-segments 530 are disposed to extend toward the second sub-segment 520, the two ends of the second sub-segment 520 are respectively connected to one end of one of the fourth sub-segments 540 and one end of the other one of the fourth sub-segments 540, and the other ends of the two fourth sub-segments 540 are disposed to extend toward the first sub-segment 510, and the other end of one of the third sub-segments 530 is disposed opposite to and spaced apart from one of the fourth sub-segments 540.

The two third sub-segments 530 may be linear, the two third sub-segments 530 may be disposed parallel to each other, and the two ends of the first sub-segment 510 are respectively connected to one end of one of the two third sub-segments 530 and one end of the other one of the two third sub-segments, such that the first sub-segment 510 and the two third sub-segments 530 can be in a U-shaped configuration. The two fourth sub-segments 540 may be linear, the two fourth sub-segments 540 may be disposed parallel to each other, and the two ends of the second sub-segment 520 are respectively connected to one end of one of the two fourth sub-segments 540 and one end of the other one of the two fourth sub-segments, such that the second sub-segment 520 and the two fourth sub-segments 540 can be in a U-shaped configuration, thereby causing the first welding track 100 to be in a structure in which two U-shapes are oppositely disposed and spaced apart. Thus, cooperation of the first welding track 100 with the second welding track 200 can be facilitated to expose a racetrack-shaped edge of the welding member 5, which facilitates welding of the racetrack-shaped edge of the welding member 5, thereby improving diversity of the shape of the exposed edge of the welding member 5 to adapt to welding members 5 of more shapes.

In some embodiments, the second welding track 200 includes two fifth sub-segments 550, where the two fifth sub-segments 550 are disposed to extend in the same direction, and the two fifth sub-segments 550 are spaced apart in a direction perpendicular to an extension direction. Two fifth sub-segments 550 are linear, and the two fifth sub-segments 550 are arranged side by side and spaced apart. Thus, the second welding track 200 includes two fifth sub-segments 550 extending in the same direction, which can reduce the complexity of the second welding track 200 and improve the production efficiency; and the second welding track 200 can cooperate with the first welding track 100 to expose a racetrack-shaped edge of the welding member 5, which facilitates welding of the racetrack-shaped edge of the welding member 5, thereby improving diversity of the shape of the exposed edge of the welding member 5 to adapt to welding members 5 of more shapes.

In summary, the pressing plate main body 11 is configured to press the welding member 5, and by means of the pressing plate main body 11, the welding member 5 can be brought into close abutment with other components, which facilitates welding of the welding member 5 and improves the stability of the welding; and the pressing plate main body 11 is provided with a first welding track 100 and a second welding track 200, where the first welding track 100 and the second welding track 200 can collectively expose the edge of the welding member 5, which facilitates welding along the edge of the welding member 5 while pressing the welding member 5, thereby improving the reliability of welding and the convenience in the welding process; and the pressing plate main body 11 can further shield non-edge positions of the end surface of the welding member 5, which can mitigate the risk of weld spatter splashing onto the end surface of the welding member 5 during welding.

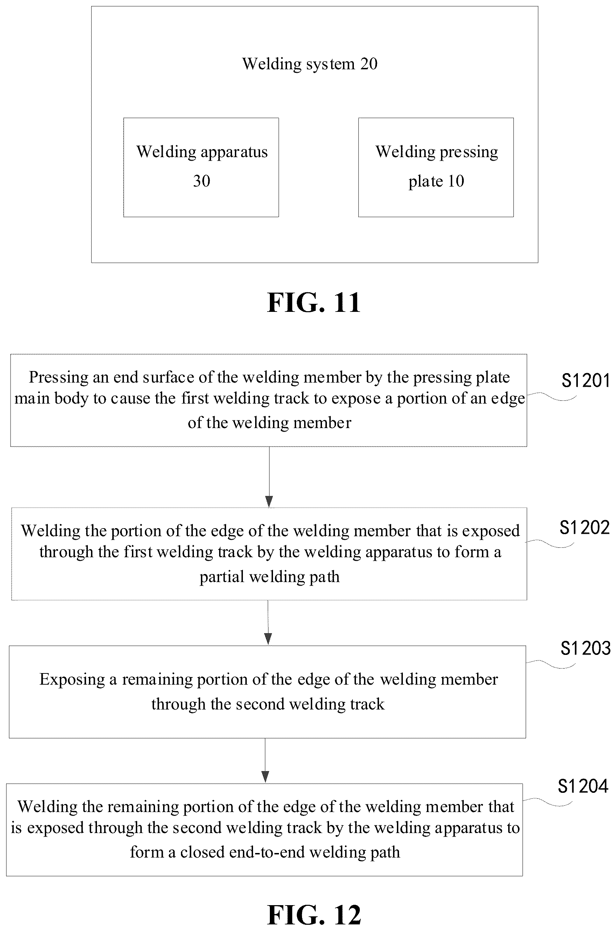

In order to solve the technical problems existing in the related embodiments, the present application further provides a welding system 20. Referring to FIG. 11. FIG. 11 is a schematic structural block diagram of a welding system 20 according to one or more embodiments.

The welding system 20 includes a welding apparatus 30 and the welding pressing plate 10 according to any of the aforementioned embodiments, where the welding pressing plate 10 is configured to press the welding member 5, and the welding apparatus 30 is configured to weld the welding member 5 along the edge of the welding member 5.

The welding apparatus 30 may be a laser welding apparatus 30. The welding efficiency and safety performance of laser welding are relatively high. Laser welding involves heating the surface to be processed through laser radiation, with the surface heat diffusing internally through thermal conduction. By controlling laser parameters such as the width, energy, peak power, and repetition frequency of laser pulses, the workpiece is melted to form a specific molten pool, thereby welding two components together. Certainly, in other embodiments, the welding apparatus 30 may include, but is not limited to, a gas welding apparatus, a fusion welding apparatus, an ultrasonic welding apparatus, or the like. Among these, the welding system 20 may further include other apparatuses, such as a pressing apparatus, a conveying apparatus, etc., where the pressing apparatus may be configured to press the welding pressing plate 10, and the conveying apparatus may convey the welding member 5 to a welding station, and so on.

In order to solve the technical problems existing in the related embodiments, the present application further provides a welding method. The welding method may be applied to the aforementioned welding system 20. Referring to FIG. 12. FIG. 12 is a schematic flowchart of a welding method according to one or more embodiments, which specifically includes the following steps S1201 to S1204.

Step S1201: pressing an end surface of the welding member by the pressing plate main body to cause the first welding track to expose a portion of an edge of the welding member.

The welding member 5 may be the aforementioned terminal post cover plate 2. Certainly, in other application scenarios, the welding member 5 may also be other components requiring welding. By way of example, when the welding member 5 is the terminal post cover plate 2, the terminal post cover plate 2 may first be installed in a hollow groove of a terminal post main body 3. Then, a battery cell 1 is conveyed to a welding station. At the welding station, the pressing plate main body 11 is further disposed to cover the end surface at a corresponding position of the terminal post cover plate 2, such that the first welding track 100 exposes a portion of the edge of the welding member 5. Furthermore, an external downward pressing force is applied to the pressing plate main body 11, such that the pressing plate main body 11 presses the end surface of the welding member 5, and the terminal post cover plate 2 tightly abuts the terminal post main body 3, facilitating subsequent welding of the terminal post cover plate 2.

Step S1202: welding the portion of the edge of the welding member that is exposed through the first welding track by the welding apparatus to form a partial welding path.

The welding apparatus 30 may include, but is not limited to, a laser welding apparatus, a gas welding apparatus, a fusion welding apparatus, an ultrasonic welding apparatus, or the like. The edge of the welding member 5 may be understood as an edge of the end surface of the welding member 5, or a side edge of the welding member 5 that is connected to the end surface of the welding member 5. By way of example, taking the welding member 5 being the terminal post cover plate 2 as an example, when the terminal post cover plate 2 is installed in the hollow groove of the terminal post main body 3, the pressing plate main body 11 is disposed to cover the end surface at the corresponding position of the terminal post cover plate 2, such that the first welding track 100 exposes the portion of the edge of the welding member 5. The welding apparatus 30 welds the portion of the edge of the welding member 5 that is exposed through the first welding track 100, thereby forming a partial welding path.

Step S1203: exposing a remaining portion of the edge of the welding member through the second welding track.

After the partial welding path has been formed, since the remaining portion of the edge of the welding member 5 is shielded by the pressing plate main body 11, the remaining portion of the edge of the welding member 5 cannot be directly welded. At this time, the remaining portion of the edge of the welding member 5 can be exposed through the second welding track 200 by moving the pressing plate main body 11 or other means, facilitating subsequent welding of the remaining portion of the edge of the welding member 5.

Step S1204: welding the remaining portion of the edge of the welding member that is exposed through the second welding track by the welding apparatus to form a closed end-to-end welding path.

After the second welding track 200 exposes the remaining portion of the edge of the welding member 5, the welding apparatus 30 may continue welding the exposed portion of the edge of the welding member 5 and form the remaining portion of the welding path. The remaining portion of the welding path may be connected end-to-end with the aforementioned formed partial welding path, thereby forming a closed end-to-end welding path. Thus, by pressing the end surface of the welding member 5 by the pressing plate main body 11, the welding member 5 can be brought into close abutment with other components through the pressing plate main body 11, which facilitates welding of the welding member 5 and improves the stability of the welding; and after the welding apparatus 30 welds the portion of the edge that is exposed through the first welding track 100, the remaining portion of the edge of the welding member 5 is exposed through the second welding track 200, and then welding of the remaining portion of the edge that is exposed through the second welding track 200 continues to be performed by the welding apparatus 30 to form a closed end-to-end welding path, which can facilitate welding along the edge of the welding member 5 while pressing the welding member 5, thereby improving the reliability of welding and the convenience in the welding process; and the pressing plate main body 11 can further shield non-edge positions of the end surface of the welding member 5, which can mitigate the risk of weld spatter splashing onto the end surface of the welding member 5 during welding.

In some embodiments, the step of exposing the remaining portion of the edge of the welding member 5 through the second welding track 200 includes: adjusting a position of the pressing plate main body 11 pressing the end surface of the welding member 5 to cause the second welding track 200 to expose the remaining portion of the edge of the welding member 5. In this embodiment, the first welding track 100 and the second welding track 200 may be located on one pressing plate main body 11. When welding along the edge of the welding member 5 is required, the pressing plate main body 11 may be pressed against the welding member 5, and the first welding track 100 is made to correspond to the position of a portion of the edge of the welding member 5 to expose the portion of the edge of the welding member 5 through the first welding track 100, facilitating a welding operation on the portion of the edge that is exposed through the first welding track 100; and after performing the welding operation on the portion of the edge of the welding member 5, the position where the pressing plate main body 11 presses on the welding member 5 may be changed, and the second welding track 200 is made to correspond to the position of a remaining portion of the edge of the welding member 5 to expose the remaining portion of the edge of the welding member 5 through the second welding track 200, facilitating a welding operation on the remaining portion of the edge that is exposed through the second welding track 200, thereby completing the operation of welding along the edge of the welding member 5. Thus, merely by adjusting the position of the pressing plate main body 11, the remaining portion of the edge of the welding member 5 can be exposed through the second welding track 200, which can simplify the process of exposing the edge of the welding member 5 during welding and improve the welding efficiency.

In some embodiments, the pressing plate main body 11 includes a first pressing plate 12 and a second pressing plate 13 disposed in a split manner, where the first welding track 100 is located on the first pressing plate 12, and the second welding track 200 is located on the second pressing plate 13; the step of pressing the end surface of the welding member 5 by the pressing plate main body 11 includes: pressing the end surface of the welding member 5 by the first pressing plate 12; and the step of exposing the remaining portion of the edge of the welding member 5 through the second welding track 200 includes: separating the first pressing plate 12 and the welding member 5; and pressing the end surface of the welding member 5 by the second pressing plate 13 to expose the remaining portion of the edge of the welding member 5 through the second welding track 200. The first pressing plate 12 and the second pressing plate 13 are two independent pressing plates. When welding along the edge of the welding member 5 is required, the first pressing plate 12 may be pressed against the welding member 5, and the first welding track 100 is made to correspond to the position of a portion of the edge of the welding member 5 to expose the portion of the edge of the welding member 5 through the first welding track 100, facilitating a welding operation by the welding apparatus 30 on the portion of the edge that is exposed through the first welding track 100; and after performing the welding operation on the portion of the edge of the welding member 5, the first pressing plate 12 may be separated from the welding member 5, then the end surface of the welding member 5 is pressed by the second pressing plate 13, and the second welding track 200 is made to correspond to the position of a remaining portion of the edge of the welding member 5 to expose the remaining portion of the edge of the welding member 5 through the second welding track 200, facilitating a welding operation by the welding apparatus 30 on the remaining portion of the edge that is exposed through the second welding track 200, thereby completing the operation of welding along the edge of the welding member 5. Thus, the first pressing plate 12 and the second pressing plate 13 are disposed in a split manner, which can facilitate forming the first welding track 100 on the first pressing plate 12 and facilitate forming the second welding track 200 on the second pressing plate 13, thereby reducing the difficulty in forming the first welding track 100 and the second welding track 200 and improving the production efficiency; and the first welding track 100 and the second welding track 200 are respectively positioned on the first pressing plate 12 and the second pressing plate 13, and by separately pressing the welding member 5 by the first pressing plate 12 and the second pressing plate 13, faster switching can be enabled between edge positions of the welding member 5 exposed through the first welding track 100 and the second welding track 200, thereby enhancing the welding efficiency.

Further, the step of pressing the end surface of the welding member 5 by the first pressing plate 12 includes: placing the welding member 5 at a first welding station; and pressing, at the first welding station, the end surface of the welding member 5 by the first pressing plate 12. The step of pressing the end surface of the welding member 5 by the second pressing plate 13 includes: placing the welding member 5 at a second welding station; and pressing, at the second welding station, the end surface of the welding member 5 by the second pressing plate 13. The first welding station and the second welding station are different. In some practical application scenarios, the first welding station may be located at an upstream station of the second welding station. By way of example, when it is required to perform welding operations on the welding member 5, the welding member 5 may first be conveyed to the first welding station. Then, the end surface of the welding member 5 is pressed by the first pressing plate 12, and a partial welding path is formed through the welding apparatus 30. After that, the first pressing plate 12 and the welding member 5 are disengaged. The welding member 5 is further conveyed to the second welding station. Then, the end surface of the welding member 5 is pressed by the second pressing plate 13, and the edge exposed through the second welding track 200 is welded by the welding apparatus 30, thereby forming a closed end-to-end welding path. Thus, the end surface of the welding member 5 is pressed by the first pressing plate 12 at the first welding station and the end surface of the welding member 5 is pressed by the second pressing plate 13 at the second welding station, which can mitigate the risk of interference between the first pressing plate 12 and the second pressing plate 13 when pressing the welding member 5; and corresponding welding operations are performed at specific stations, which can further improve the welding efficiency for welding the welding member 5.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A welding pressing plate, comprising a pressing plate main body configured to press a welding member, the pressing plate main body being provided with a first welding track and a second welding track, wherein the first welding track and the second welding track are spaced apart, the first welding track and the second welding track each penetrate through two opposite side surfaces of the pressing plate main body, the pressing plate main body is disposed to cover an end surface of the welding member, the first welding track is configured to expose a portion of an edge of the welding member, and the second welding track is configured to expose a remaining portion of the edge of the welding member.

2. The welding pressing plate according to claim 1, wherein the pressing plate main body comprises a first pressing plate and a second pressing plate disposed in a split manner, the first pressing plate and the second pressing plate being each configured to press the welding member, wherein the first welding track is located on the first pressing plate, and the second welding track is located on the second pressing plate.

3. The welding pressing plate according to claim 1 or 2, wherein the numbers of the first welding tracks and the second welding tracks are each at least two, the at least two first welding tracks being spaced apart from each other, and the at least two second welding tracks being spaced apart from each other, with one first welding track corresponding to one second welding track, wherein the welding pressing plate is disposed to cover end surfaces of at least two of the welding members, one first welding track is configured to expose a portion of an edge of one welding member, and one second welding track corresponding to the first welding track is configured to expose a remaining portion of the edge of the one welding member.

4. The welding pressing plate according to any one of claims 1 to 3, wherein
an opening area of the first welding track on a side of the pressing plate main body facing away from the welding member is greater than an opening area of the first welding track on a side of the pressing plate main body facing toward the welding member;
and/or, an opening area of the second welding track on a side of the pressing plate main body facing away from the welding member is greater than an opening area of the second welding track on a side of the pressing plate main body facing toward the welding member.

5. The welding pressing plate according to claim 4, wherein
from the side of the pressing plate main body facing away from the welding member to the side of the pressing plate main body facing toward the welding member, the opening area of the first welding track gradually decreases;
and/or, from the side of the pressing plate main body facing away from the welding member to the side of the pressing plate main body facing toward the welding member, the opening area of the second welding track gradually decreases.

6. The welding pressing plate according to any one of claims 1 to 5, wherein
the first welding track comprises a first track segment, and the second welding track comprises a second track segment, the first track segment and the second track segment being both arc-shaped.

7. The welding pressing plate according to claim 6, wherein
the first welding track further comprises two third track segments, wherein the two ends of the first track segment are respectively connected to one end of one of the third track segments and one end of the other one of the third track segments, and the other ends of the two third track segments extend away from the first track segment in the same direction;
and/or, the second welding track comprises two fourth track segments, wherein the two ends of the second track segment are respectively connected to one end of one of the fourth track segments and one end of the other one of the fourth track segments, and the other ends of the two fourth track segments extend away from the second track segment in the same direction.

8. The welding pressing plate according to claim 6, wherein the pressing plate main body is further provided with a first welding hole, the first welding hole penetrating through two opposite side surfaces of the pressing plate main body, wherein
the first welding hole is disposed opposite to and spaced apart from the first track segment, the first welding hole being configured to expose a portion of the remaining portion of the edge;
and/or, the first welding hole is disposed opposite to and spaced apart from the second track segment, the first welding hole being configured to expose a portion of the portion of the edge.

9. The welding pressing plate according to any one of claims 1 to 5, wherein
the first welding track comprises a fifth track segment and two sixth track segments, wherein the two sixth track segments are arc-shaped, inner arc sides of the two sixth track segments being oppositely disposed, and in the two sixth track segments, one pair of opposing ends are respectively connected to the two ends of the fifth track segment, and the other pair of opposing ends are spaced apart;
and/or, the second welding track comprises a seventh track segment and two eighth track segments, wherein the two eighth track segments are arc-shaped, inner arc sides of the two eighth track segments being oppositely disposed, and in the two eighth track segments, one pair of opposing ends are respectively connected to the two ends of the seventh track segment, and the other pair of opposing ends are spaced apart.

10. The welding pressing plate according to claim 9, wherein the pressing plate main body is further provided with a second welding hole, the second welding hole penetrating through two opposite side surfaces of the pressing plate main body, wherein
the second welding hole is located between the two spaced-apart ends of the two sixth track segments, the second welding hole being configured to expose a portion of the remaining portion of the edge;
and/or, the second welding hole is located between the two spaced-apart ends of the two eighth track segments, the second welding hole being configured to expose a portion of the portion of the edge.

11. The welding pressing plate according to any one of claims 1 to 5, wherein the first welding track comprises a first sub-segment and a second sub-segment, wherein the first sub-segment and the second sub-segment are both arc-shaped, inner arc sides of the first sub-segment and the second sub-segment being oppositely disposed and spaced apart.

12. The welding pressing plate according to claim 11, wherein the first welding track further comprises two third sub-segments and two fourth sub-segments, wherein the two ends of the first sub-segment are respectively connected to one end of one of the third sub-segments and one end of the other one of the third sub-segments, and the other ends of the two third sub-segments are disposed to extend toward the second sub-segment, the two ends of the second sub-segment are respectively connected to one end of one of the fourth sub-segments and one end of the other one of the fourth sub-segments, and the other ends of the two fourth sub-segments are disposed to extend toward the first sub-segment, and the other end of one of the third sub-segments is disposed opposite to and spaced apart from one of the fourth sub-segments.

13. The welding pressing plate according to claim 11 or 12, wherein the second welding track comprises two fifth sub-segments, wherein the two fifth sub-segments are disposed to extend in the same direction, and the two fifth sub-segments are spaced apart in a direction perpendicular to an extension direction.

14. A welding system, comprising a welding apparatus and the welding pressing plate according to any one of claims 1 to 13, wherein the welding pressing plate is configured to press a welding member, and the welding apparatus is configured to weld the welding member along an edge of the welding member.

15. A welding method, wherein the welding method is applied to the welding system according to claim 14, the welding method comprising:
pressing an end surface of the welding member by the pressing plate main body to cause the first welding track to expose a portion of an edge of the welding member;
welding the portion of the edge of the welding member that is exposed through the first welding track by the welding apparatus to form a partial welding path;
exposing a remaining portion of the edge of the welding member through the second welding track; and
welding the remaining portion of the edge of the welding member that is exposed through the second welding track by the welding apparatus to form a closed end-to-end welding path.

16. The welding method according to claim 15, wherein the step of exposing the remaining portion of the edge of the welding member through the second welding track comprises:
adjusting a position of the pressing plate main body pressing the end surface of the welding member to cause the second welding track to expose the remaining portion of the edge of the welding member.

17. The welding method according to claim 15 or 16, wherein the pressing plate main body comprises a first pressing plate and a second pressing plate disposed in a split manner, wherein the first welding track is located on the first pressing plate, and the second welding track is located on the second pressing plate;
the step of pressing the end surface of the welding member by the pressing plate main body comprises:
pressing the end surface of the welding member by the first pressing plate; and
the step of exposing the remaining portion of the edge of the welding member through the second welding track comprises:
separating the first pressing plate and the welding member; and
pressing the end surface of the welding member by the second pressing plate to expose the remaining portion of the edge of the welding member through the second welding track.

18. The welding method according to claim 17, wherein the step of pressing the end surface of the welding member by the first pressing plate comprises:
placing the welding member at a first welding station;
pressing, at the first welding station, the end surface of the welding member by the first pressing plate; and
the step of pressing the end surface of the welding member by the second pressing plate comprises:
placing the welding member at a second welding station; and pressing, at the second welding station, the end surface of the welding member by the second pressing plate.
